Europäisches Patentamt

European Patent Office

Office européen des brevets

(11) Veröffentlichungsnummer: **0 048 314**
**A1**

(12) **EUROPÄISCHE PATENTANMELDUNG**

(21) Anmeldenummer: **81102445.4**

(22) Anmeldetag: **01.04.81**

(51) Int. Cl.³: **F 16 H 55/44**

(30) Priorität: **19.09.80 DE 3035341**

(43) Veröffentlichungstag der Anmeldung:
**31.03.82 Patentblatt 82/13**

(84) Benannte Vertragsstaaten:
**AT BE CH DE FR GB IT LI NL SE**

(71) Anmelder: **Winkelmann & Pannhoff GmbH**
**Schmalbachstrasse 2**
**D-4730 Ahlen(DE)**

(72) Erfinder: **Winkelmann, Heinrich**
**Auf dem Westkamp 26**
**D-4730 Ahlen(DE)**

(74) Vertreter: **Patentanwälte Meinke und Dabringhaus**
**Westenhellweg 67**
**D-4600 Dortmund 1(DE)**

(54) Riemenscheibe aus im wesentlichen zwei verformten Blechteilen.

(57) Bei einer Riemenscheibe, insbesondere Zahnriemenscheibe 1, aus im wesentlichen zwei verformten Blechteilen 2, 3 mit einem im wesentlichen radial verlaufenden Steg und einer in einem Blechteil angeformten Nabe 4, sollen noch größere Drehmomente bei einfacher Herstellung übertragen und dabei die Verformung der Nabe 4 auch bei hohem Anzugsmoment, das bei der Montage einer derartigen Riemenscheibe aufgebracht werden kann, praktisch ganz verhindert werden. Dies wird dadurch erreicht, daß die Nabe 4 als an sich bekannter Konus ausgebildet und durch wenigstens ein Element 11 gegen das Aufweiten verstärkt ist.

FIG.1

EP 0 048 314 A1

Die Erfindung richtet sich auf eine Riemenscheibe, insbesondere Zahnriemenscheibe, aus im wesentlichen zwei verformten Blechteilen mit einem im wesentlichen radial verlaufenden Steg und einer in einem Blechteil angeformten Nabe.

Derartige Riemenscheiben, unabhängig davon, ob es sich um Zahnriemenscheiben, Flachriemenscheiben oder Keilriemenscheiben handelt, haben ein weites Einsatzfeld und es sind bereits die unterschiedlichsten Lösungen zur Gestaltung derartiger Riemenscheiben bekannt.

Aus der DE-AS 26 55 909 ist eine Zahnriemenscheibe der eingangs bezeichneten Art bekannt. Diese bekannte Zahnriemenscheibe besteht aus verformten Blechteilen und einer zylindrisch geformten Nabe innerhalb des Zahnkranzes, wobei dort zur Übertragung von größeren Kräften bei geringem Fertigungsaufwand und hoher Maßgenauigkeit die Nabe topfförmig gestaltet ist, flach und mit einem axialen Anschlag für ein Wellenende. Diese bekannte Zahnriemenscheibe weist bereits eine Vielzahl von Vorteilen gegenüber anderen Zahnriemenscheiben auf.

Der Erfindung liegt gegenüber der bekannten Zahnriemenscheibe die Aufgabe zugrunde, noch größere Drehmomente bei einfacher Herstellung übertragen zu können und dabei die Verformung der Nabe auch bei hohem Anzugsmoment, das bei der Montage einer derartigen Riemenscheibe aufgebracht werden kann, praktisch ganz zu verhindern.

Diese Aufgabe wird bei einer Riemenscheibe der eingangs bezeichneten Art dadurch gelöst, daß die Nabe als an sich bekannter Konus ausgebildet und durch wenigstens ein Element gegen das Aufweiten verstärkt ist.

Bei bekannten Riemenscheiben mit konusförmiger Nabe besteht entweder die ganze Zahnriemenscheibe aus einem Gußteil (FR-PS 470 469) oder die Nabe ist ein speziell gefertigtes Gußteil, wie dies durch das Gebrauchsmuster 73 01 225 der Anmelderin bekannt geworden ist. Eine Nabe als Konus in einem verformten Blechteil selbst vorzusehen, ist an sich auch bekannt, wie sich aus der DE-OS 27 29 703 der Anmelderin ergibt, dort ist allerdings eine Zahnriemenscheibe aus Kunststoff offenbart, die nur zur Übertragung sehr kleiner Momente einsetzbar ist.

Ein wesentlicher Vorteil der Riemenscheibe nach der Erfindung liegt gegenüber den bekannten Riemenscheiben darin, daß durch die Kombination eines Konus in einem verformten Blechteil die Herstellung sehr wirtschaftlich möglich ist, gleichzeitig daß durch das Vorsehen eines verstärkenden Elementes große Anzugsmomente aufgebracht werden können, ohne daß es zur Verformung der Nabe kommt, so daß mit der erfindungsgemäßen Riemenscheibe große Drehmomente übertragbar sind.

In Ausgestaltung sieht die Erfindung vor, daß die Nabe in der Gebrauchslage von einem Verstärkungsring übergriffen oder in ihrem Inneren untergriffen ist. Diese Maßnahmen haben u. a. den Vorteil, daß das verstärkende Element sehr leicht und einfach herzustellen ist, wobei die Gesamtriemenscheibe die Vorteile der Blechverformungstechniken beibehält.

Als besonders zweckmäßig hat sich erwiesen, wenn, wie dies die Erfindung ebenfalls vorsieht, der Verstärkungsring in der Gebrauchslage zwischen den beiden Blechteilen angeordnet ist. Hierbei kann es zweckmäßig sein, wenn die beiden Blechteile so geformt sind, daß Bereiche von ihnen die der Nabe abgewandte Oberfläche des Verstärkungsringes wenigstens teilweise übergreifen, wie dies die Erfindung in weiterer Ausgestaltung auch vorsieht. Durch diese Maßnahmen kann bereits eine so feste Verbindung zwischen den verformten Blechteilen und dem Verstärkungsring erreicht werden, daß eine zusätzliche Verbindung überflüssig ist.

Sind die Riemenscheibenteile anders gestaltet oder ist eine besonders innige Verbindung zwischen Verstärkungsring und nabenbildender Außenfläche erwünscht, kann erfindungsgemäß der Verstärkungsring mit der Außenfläche des die Nabe bildenden Blechteiles in diesem Bereich fest verbunden, z. B. schutzgasgelötet sein.

Zweckmäßig kann es auch bei dieser Ausgestaltung der Nabe sein, wenn das die Nabe bildende Blechteil am Nabenende in Richtung der Mittelachse abgewinkelt ist, d.h. der Konus am Ende seines kleinsten Durchmessers wenigstens mit einem Anschlagwulst versehen ist, so daß u. a. die gesamte Nabenausbildung zusätzlich verstärkt wird.

Nach der Erfindung kann auch vorgesehen sein, daß das nabenbildende Blechteil eine größere Wandstärke aufweist, als das andere Blechteil. Eine Maßnahme, die ebenfalls zur Gesamtsteifigkeit einer erfindungsgemäßen Riemenscheibe beiträgt.

Die Erfindung ist nachstehend anhand der Zeichnung beispielsweise näher erläutert. Diese zeigt in

Fig. 1 einen Schnitt durch eine Zahnriemenscheibe nach der Erfindung und in

Fig. 2 einen Schnitt durch ein weiteres Ausführungsbeispiel der Erfindung.

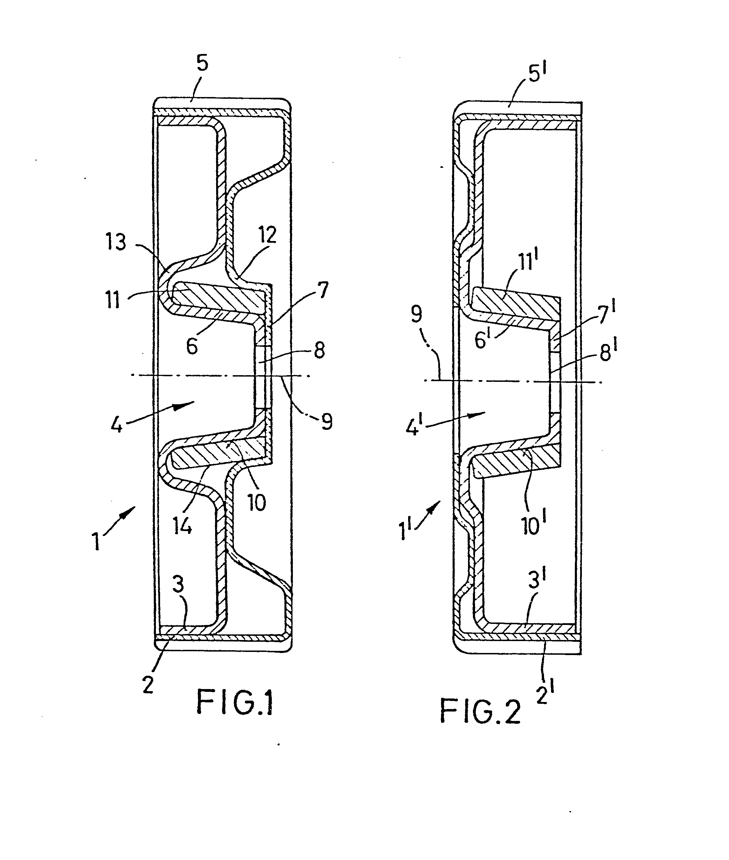

Die in den Fig. 1 und 2 dargestellte Zahnriemenscheibe 1 bzw. 1' (die der Fig. 1 entsprechenden Teile in Fig. 2 sind gestrichen beziffert), wird von zwei verformten Blechteilen 2 und 3 gebildet. Das die mit 4 bezeichnete Nabe bildende Blechteil 3 weist eine stärkere Wandstärke auf, als das die Zähne 5 bildende Blechteil 2.

Die Nabe 4 ist als Konus 6 ausgebildet, der an seiner Seite mit dem geringsten Durchmesser in einem abgekröpften Teil 7 endet mit einer Mittenbohrung 8. Die Abkröpfung 7 ist dabei in Richtung auf die mit 9 in den Fig. 1 und 2 bezeichnete Mittelachse abgewinkelt.

Über die Außenflächen 10 des den Konus 6 bildenden Blechteiles 3 ist in diesem Bereich ein Verstärkungsring 11 geschoben und ggf. dort dauerhaft durch Kleben, Schweißen, insbesondere aber durch Schutzgashartlöten befestigt.

Bei dem in Fig. 1 dargestellten Ausführungsbeispiel schließen die beiden verformten Blechteile 2 und 3 den Verstärkungsring 11 zwischen sich ein. Dabei sind beide Blechteile mit Bereichen 12 bzw. 13 versehen, die so über die Außenfläche 14 des Verstärkungsringes 11 abgewinkelt sind, daß sie diese wenigstens teilweise übergreifen, wie sich aus Fig. 1 ergibt. Diese Einbuchtungen 12 und 13 können sich, wie in Fig. 1 im Falle der Einbuchtung 12 dargestellt, so dicht an den Verstärkungsring 11 anlegen, daß dieser eingeklemmt und damit gesichert ist.

In Fig. 2 sind die zwei verformten Blechteile 2 und 3 in abgewandelter Form dargestellt. Der Verstärkungsring 11' ist dort vorzugsweise an der Außenoberfläche 10' des Konus 6' verlötet.

Natürlich sind die beschriebenen Ausführungsbeispiele noch in vielfacher Hinsicht abzuändern, ohne den Grundgedanken der Erfindung zu verlassen. So ist insbesondere die Erfindung nicht darauf beschränkt, daß lediglich eines der Blechteile den Konus bildet. Diese beiden Blechteile können so verformt sein, daß sie einen aneinanderliegenden parallelen Wandverlauf im Bereich der Nabe haben. Auch ist der Verstärkungsring nicht, wie dargestellt, auf die Ausbildung als einstückiges Bauteil beschränkt. In gleicher Weise können hier, je nach Belastungsanforderungen, segmentartige Ringteile mit axialer oder in radialer Teilung vorgesehen sein.

Patentansprüche :

1. Riemenscheibe, insbesondere Zahnriemenscheibe (1), aus im wesentlichen zwei verformten Blechteilen (2, 3) mit einem im wesentlichen radial verlaufenden Steg und einer in einem Blechteil angeformten Nabe (4), dadurch gekennzeichnet, daß die Nabe (4) als an sich bekannter Konus ausgebildet und durch wenigstens ein Element (11) gegen das Aufweiten verstärkt ist.

2. Riemenscheibe nach Anspruch 1, dadurch gekennzeichnet, daß die Nabe (4) in der Gebrauchslage von einem Verstärkungsring (11) übergriffen oder in ihrem Inneren untergriffen ist.

3. Riemenscheibe nach Anspruch 2, dadurch gekennzeichnet, daß der Verstärkungsring (11) in der Gebrauchslage zwischen den beiden Blechteilen (2, 3) angeordnet ist.

4. Riemenscheibe nach Anspruch 3, dadurch gekennzeichnet, daß Bereiche (12, 13) der beiden Blechteile (2, 3) die der Nabe (4) abgewandte Oberfläche (14) des Verstärkungsringes (11) wenigstens teilweise übergreifen.

5. Riemenscheibe nach einem der vorangehenden Ansprüche, dadurch gekennzeichnet, daß der Verstärkungsring (11) mit der Außenfläche (10) des die Nabe (4) bildenden Blechteiles (3) in diesem Bereich fest verbunden ist.

6. Riemenscheibe nach einem der vorangehenden Ansprüche, dadurch gekennzeichnet, daß das die Nabe (4) bildende Blechteil (3) am Nabenende (7) in Richtung der Mittelachse (9) abgewinkelt ist.

7. Riemenscheibe nach einem der vorangehenden Ansprüche, dadurch gekennzeichnet, daß das nabenbildende Blechteil (3) eine größere Wandstärke aufweist als das andere Blechteil (2).

∨

FIG.1

FIG.2

## EUROPÄISCHER RECHERCHENBERICHT

Europäisches
Patentamt

| EINSCHLÄGIGE DOKUMENTE | | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | F 16 H 55/44 |
| | US - A - 2 680 380 (W.H. BAGLEY) <br> + Gesamt + <br> -- | 1,3 | |
| | AT - B - 48 067 (F. MARBOT) <br> + Gesamt + <br> -- | 1,2,4 | |
| | DE - B2 - 2 655 909 (BAYERISCHE MOTOREN WERKE) <br> + Gesamt + <br> ---- | 1,6,7 | |

**RECHERCHIERTE SACHGEBIETE (Int Cl.³)**

F 16 H 55/00
F 16 C 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angefuhrtes Dokument
L: aus andern Grunder angefuhrtes Dokument
&: Mitglied der gleicher Patentfamilie ubereinstimmendes Dokument

X Der vorliegende Recherchenbericht wurde fur alle Patentanspruche erstellt

| Recherchenort | Abschlußdatum der Recherche | Prufer |
|---|---|---|
| WIEN | 30-09-1981 | ROUSSARIAN |

EPA form 1503.1    06.78